# EUROPÄISCHE PATENTSCHRIFT

(11) **EP 3 433 919 B1**
(45) Veröffentlichungstag und Bekanntmachung des Hinweises auf die Patenterteilung: **04.08.2021**
(21) Anmeldenummer: 17711665.4
(22) Anmeldetag: 20.03.2017
(51) Int. Cl.: H02K 1/32, H02K 9/19, H02K 9/12

(54) **ROTORSEGMENT EINER ELEKTRISCHEN MASCHINE**
ROTOR SEGMENT OF AN ELECTRIC MACHINE
SEGMENT DE ROTOR D'UNE MACHINE ÉLECTRIQUE

(30) Priorität: 23.03.2016 DE 102016204794
(43) Veröffentlichungstag der Anmeldung: 30.01.2019
(73) Patentinhaber: ThyssenKrupp Presta TecCenter AG, 9492 Eschen (LI); thyssenkrupp AG, 45143 Essen (DE)
(72) Erfinder: PAUL, Daniel, 09235 Burkhardtsdorf (DE); MEUSEL, Jürgen, 09573 Dittmannsdorf (DE)
(74) Vertreter: thyssenkrupp Intellectual Property GmbH
(86) Internationale Anmeldenummer: PCT/EP2017/056485
(87) Internationale Veröffentlichungsnummer: WO 2017/162546

(56) Entgegenhaltungen:
- CN-U- 204 721 187
- JP-A- 2011 097 784
- JP-A- 2012 161 134
- JP-A- 2013 115 848
- JP-U- S56 139 367
- US-A1- 2002 195 887
- US-A1- 2014 333 163

## Beschreibung

Die vorliegende Erfindung betrifft ein Rotorsegment einer elektrischen Maschine, wobei das Rotorsegment eine gebaute Rotorwelle aufweist. Ferner betrifft die Erfindung eine elektrische Maschine mit einem Rotorsegment mit einer gebauten Rotorwelle.

### STAND DER TECHNIK

Grundlegend ist die Ausgestaltung von hohlzylindrischen Rotorwellen zum Zwecke der Gewichtsreduzierung rotierenden Massen bekannt. Es ist des Weiteren als grundlegend bekannt anzunehmen, dass Blechpakete derart auf der Rotorwelle befestigt sein können, dass radial zwischen dem Wellenaußendurchmesser und dem Blechpaketinnendurchmesser kein Pressverband erforderlich ist. Hierbei wird das Blechpaket mittels zweier Druckscheiben axial verpresst, wobei eine reibschlüssige Drehmomentübertragung des in den Blechpaketen generierten Drehmoments über die Druckscheiben und die mit diesen drehfest verbundene Welle bis hin zum Ort des Abgriffs, das bedeutet vorteilhaft der Verzahnung, erfolgt. So ist beispielsweise in der WO 2014/169972 A1 ein Einzelsegmentläufer dargestellt, bei welchem die Blechpaketsegmente gemäß der Figur 7 mit Biegeträgern versehen sind, welche in radial verlaufende Schlitze einer Endscheibe eingesteckt werden, sodass die Blechpaketsegmente von der Welle, insbesondere der Rotorwelle der elektrischen Maschine beabstandet sind. Hierdurch berühren die Blechpaketsegmente die Welle weder mittelbar noch unmittelbar über beispielsweise eine Hülse. Das bedeutet, dass zwischen den Blechpaketsegmenten und der äußeren Oberfläche der Welle ein Spiel bzw. ein Abstand erzeugt ist. Basierend auf diesem folglich gewünschten radialen Spalt zwischen dem Wellenaußendurchmesser und dem Blechpaketinnendurchmesser besteht demnach eine theoretische Berührungsfreiheit zwischen diesen Bauteilen, sodass parasitäre Kurzschlussströme, wie beispielsweise Wirbelströme, von den Blechlamellen auf bzw. über die Rotorwelle wirksam vermieden werden. Jedoch weist diese Berührungsfreiheit auch den Nachteil auf, dass die aufgrund der elektromagnetischen Funktion entstehende Verlustwärme aus den Blechpaketen nicht mittels entsprechender Wärmeleitung über die Rotorwelle und von dieser ausgehend über entsprechende Lagerstellen beispielsweise auf das Gehäuse verteilt werden, wodurch das Blechpaket selbst entwärmt werden könnte. Einzig die Druckscheiben, welche das Blechpaket axial einklemmen, dienen als Wärmeleitungsbrücken der in den Blechpaketen entstehenden Wärme auf die Rotorwelle. Diese weisen jedoch eine merklich verringerte Übertragungsfläche und demzufolge eine verringerte Wärmeableitung auf.

Um das Blechpaket bei einer derartigen Anordnung kühlen bzw. entwärmen zu können, offenbart die WO 2014/169972 A1 Endscheiben mit Löchern, durch welche hindurch ein Kühlmittel, insbesondere eine kühle Luft, in einen Spalt zwischen der Welle und dem Blechpaket gefördert werden kann. Bei einer derartigen Ausführungsform einer mit Löchern versehenen Endscheiben ist es jedoch erforderlich, dass das Blechpaket selbst aus einzelnen Blechpaketsegmenten, wie in der benannten Druckschrift aufgezeigt, besteht, sodass ein Einbringen des Kühlmittels in den Spalt in axialer Richtung ermöglicht werden kann. Die Herstellung und Anordnung derartiger Blechpaketsegmente erfordert jedoch ein kostenintensives Herstellungs- und Montageverfahren.

Eine alternative Form der Kühlung zeigt die DE 10 2010 063 973 A1. Ohne die Ausprägung des Spiels zwischen der Welle und dem Blechpaket sowie der Ausgestaltung von einzelnen in den Endscheiben gesteckten Blechpaketsegmenten ist es erforderlich axiale Bohrungen durch das Blechpaket vorzusehen, um ausgehend von den Druckscheiben das Kühlmittel durch das Blechpaket zu transportieren. Dies erfordert wiederum einen erhöhten Bearbeitungsaufwand des Blechpaketes, insbesondere der einzelnen Bleche des Blechpaketes, die zudem derart zueinander im Blechpaket anzuordnen sind, dass der Durchgang des Kühlmediums ermöglicht werden kann.

Ein Rotorsegment einer elektrischen Maschine, wobei das Rotorsegment eine Rotorwelle und ein Blechpaket, welches derart auf der Rotorwelle angeordnet ist, dass zwischen einer äußeren Oberfläche eines Hohlzylindermantels der Rotorwelle und einer inneren Oberfläche des Blechpaketes ein zum Durchlass eines Kühlmediums radial hinreichend groß dimensionierter Ringspalt erzeugt ist aufweist, sowie zwei Druckelemente aufweist, welche, das Blechpaket axial einspannend, auf der Rotorwelle bewegungsfest aufgenommen sind, wobei wenigstens eines der Druckelemente als kühlmediumdurchlassendes Haltesegment ausgebildet ist, ist beispielsweise aus der JP 2011 097784 A, JP 2012 161134 A oder JP 2013 115848 A bekannt geworden.

### OFFENBARUNG DER ERFINDUNG

Es ist daher die Aufgabe der vorliegenden Erfindung, die voranstehend beschriebenen Nachteile bei einem Rotorsegment einer elektrischen Maschine, insbesondere einer elektrischen Maschine zumindest teilweise zu beheben. Insbesondere ist es die Aufgabe der vorliegenden Erfindung ein Rotorsegment einer elektrischen Maschine sowie eine elektrische Maschine zur Verfügung zu stellen, welche auf eine einfache und kostengünstige Art und Weise eine optimale Entwärmung, insbesondere Kühlung des Blechpaketes ermöglichen, wobei eine aufwendige Bearbeitung des Blechpaketes, insbesondere die Erzeugung etwaiger zusätzlicher Kühlkanäle innerhalb des Blechpaketes vermieden werden soll.

Die voranstehende Aufgabe wird gelöst durch ein Rotorsegment einer elektrischen Maschine mit den Merkmalen des Anspruchs 1 sowie durch eine elektrische Maschine mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Rotorsegment beschrieben sind, selbstverständlich auch im Zusammenhang mit der erfindungsgemäßen elektrischen Maschine und jeweils umgekehrt, sodass bezüglich der Offenbarung zu den einzelnen Erfindungsaspekten stets wechselseitig Bezug genommen wird bzw. werden kann.

Das erfindungsgemäße Rotorsegment einer elektrischen Maschine weist eine Rotorwelle und ein Blechpaket auf, welches derart auf der Rotorwelle angeordnet ist, dass zwischen einer äußeren Oberfläche eines Hohlzylindermantels der Rotorwelle und einer inneren Oberfläche des Blechpaketes ein zum Durchlass eines Kühlmediums radial hinreichend dimensionierter Spalt erzeugt ist. Weiterhin weist das Rotorsegment erfindungsgemäß zwei Druckelemente auf, welche, das Blechpaket axial einspannend, auf der Rotorwelle bewegungsfest aufgenommen sind, wobei wenigstens eines der Druckelemente als kühlmediumdurchlassendes Haltesegment ausgebildet ist.

Die elektrische Maschine kann vorzugsweise eine Synchronmaschine oder eine Asynchronmaschine, eine Gleichstrommaschine oder eine Wechselstrommaschine sein. Es ist auch denkbar, dass anstelle einer gebauten Rotorwelle eine einstückige Rotorwelle Verwendung findet. Zumindest einer der Flansche, vorteilhaft beide Flansche weisen einen Flanschzapfen auf. Die Flanschzapfen können beispielsweise mit einem Gewinde oder einer Durchgangsbohrung versehen sein. Die Flanschzapfen der beiden Flansche dienen vorteilhaft zur Lagerung der Rotorwelle, insbesondere des gesamten Rotorsegmentes, innerhalb eines Gehäuses der elektrischen Maschine. Über beispielsweise ein im Flanschzapfen eingebrachtes Gewinde, insbesondere Innengewinde, ist vorteilhaft eine Welle an die Rotorwelle drehmomentübertragend anbindbar.

Das Blechpaket besteht bekannter Weise aus einzelnen Blechscheiben, welche mittels der Druckelemente axial verspannt werden. Die Druckelemente sind vorteilhaft verdrehfest auf der Rotorwelle, insbesondere dem Hohlzylindermantel der Rotorwelle, angeordnet bzw. aufgepresst und übertragen das von dem Blechpaket erzeugte Drehmoment auf die Rotorwelle. Vorteilhaft ist der zwischen dem Außendurchmesser des Hohlzylindermantels und dem Blechpaketinnendurchmesser erzeugte Spalt nicht lediglich derart groß, dass eine Berührungsfreiheit zwischen Blechpaket und Rotorwelle besteht und folglich einer als minimale Spielpassung ausgelegten Verbindung entspricht. Vielmehr weist der erzeugte Spalt eine größere, insbesondere deutlich sichtbare in radialer Richtung erstreckenden Größe auf. Vorteilhaft ist dabei die sich in radialer Richtung erstreckende Höhe derart dimensioniert, dass eine wirksame konvektive Kühlung realisiert wird. Dies bedeutet, dass die von dem Blechpaket erzeugte Wärme mittels eines durch den Spalt fließenden Kühlmediums aufgenommen und von den Blechpaketen abtransportiert wird. Das Kühlmedium ist dabei vorteilhaft ein flüssiges oder gasförmiges Medium. Vorteilhaft dient die groß dimensionierte, über eine Spielpassung deutlich hinausgehende Spalthöhe zu einer tatsächlichen Berührungsfreiheit zwischen dem Blechpaket und der Rotorwelle und sorgt damit für eine elektrische Isolation. Ein weiterer Vorteil dieser Ausgestaltung ist das weder der Rotorwellenaußendurchmesser bzw. insbesondere der Hohlzylindermantelaußendurchmesser noch der Blechpaketinnendurchmesser mit engen Toleranzen zu fertigen ist. Folglich ist es vorteilhaft möglich aufwendige Schleifprozess an der Rotorwelle, insbesondere dem Hohlzylindermantel der Rotorwelle zu vereinfachen bzw. zu vermeiden. Gleichermaßen ist die Innengeometrie der gestanzten Bleche des Blechpaketes vorteilhaft kostengünstiger aufgrund einer freieren Geometrie herzustellen.

Um eine optimal wirksame Konvektion im erzeugten Spalt zu ermöglichen, ist ein hinreichend ausgebildeter Strömungsquerschnitt vorzusehen. Unter Berücksichtigung von Wandreibungswiderständen der Kühlmediumströmung in diesem Spalt, welcher auch als Ringspalt bezeichnet werden kann, und aus weiteren Auslegungsgrundlagen für eine konvektive Kühlmediumströmung ergibt sich vorteilhaft eine Strömungsfläche von ca. 400 - 1000 mm². Vorteilhaft ist es denkbar die zu dimensionierende Spalthöhe für einen ausreichend großen Strömungsquerschnitt auf den Außendurchmesser der Rotorwelle zu beziehen. Hierdurch ist es möglich jedwede Formen und Abmessungen elektrischer Maschinen und somit der Rotorwellengeometrie, welche sehr vielfältig sein können, zu berücksichtigen. Es ist des Weiteren möglich, dass die Spalthöhe mindestens 1,5 - 3 mm betragen. Als vorteilhaft für einen Referenzdurchmesser des Spaltes von ca. 80 mm ist eine Spalthöhe von etwa 2,5 mm anzusehen, welche folglich einen Strömungsquerschnitt von ca. 600 mm² ergibt. Bei zunehmendem Rotorwellendurchmesser ist in der Regel auch mit einem zunehmenden Entwärmungsbedarf zu rechnen, wonach vorteilhaft ein als erster Auslegungsgrundsatz dienendes Verhältnis von etwa 1:8 des Rotorwellendurchmessers zum Strömungsquerschnitt bei einer Spalthöhe von 2,5 mm abgeleitet werden kann.

Es ist im Rahmen der Erfindung denkbar, dass das Rotorsegment eine gebaute Rotorwelle aufweist, welche aus dem Hohlzylindermantel sowie einem ersten an einer ersten Stirnseite des Hohlzylindermantels angeordneten Flansch und einem zweiten an einer zweiten Stirnseite des Hohlzylindermantels angeordneten Flansch besteht. Der Hohlzylindermantel sowie die angeordneten Flansche bilden folglich einen Rotorwellenhohlraum aus. Es wäre ebenso denkbar, dass die gebaute Rotorwelle zweiteilig ausgestaltet ist. Dabei weist der Hohlzylindermantel einen angeformten Flansch auf, welcher sich beispielsweise als ein sich im Wesentlichen verjüngender Hohlzylinderabschnitt ausbildet. Ein zweiter Flansch ist an der anderen sich nicht verjüngenden Stirnseite angeordnet.

Erfindungsgemäß wird das Blechpaket mittels zweier Druckelemente axial eingespannt, wobei wenigstens eines dieser Druckelemente als kühlmediumdurchlassendes Haltesegment ausgebildet ist. Vorteilhaft ist das kühlmediumdurchlassende Haltesegment eine Druckscheibe mit zumindest einer axialen oder radialen Durchlassöffnung. Dabei ist die axiale oder auch die radiale Durchlassöffnung derart ausgestaltet, dass ein Kühlmediumfluss ausgehend von dem Spalt durch diese Durchlassöffnung erfolgt oder vice versa.

Es ist des Weiteren denkbar, dass das kühlmediumdurchlassende Haltesegment aus einer Druckscheibe und einem zwischen der Druckscheibe und dem Blechpaket anzuordnendem Zwischenelement mit zumindest einer radialen Durchlassöffnung besteht. Hierbei ist das kühlmediumdurchlassende Haltesegment vorteilhaft aus zwei Einzelbauteilen zusammengesetzt, wobei es sich bei der Druckscheibe vorteilhaft um eine zur Verwendung grundlegend bekannte und folglich handelsübliche Druckschreibe handelt. Das Zwischenelement ist vorteilhaft vergleichbar zu der Druckscheibe ausgestaltet, weist jedoch eine radiale Durchlassöffnung auf, welche fluidübertragend mit dem Spalt wechselwirkt. Ein derart ausgestaltetes kühlmediumdurchlassendes Haltesegment ist vorteilhaft derart auf der Rotorwelle angeordnet, dass das Zwischenelement zwischen der Druckschreibe und einer Stirnseite des Blechpaketes angeordnet ist. Das Zwischenelement ist vorteilhaft ein eigenständiges Bauteil. Es ist jedoch auch denkbar, dass die Druckschreibe und das Zwischenelement als einteiliges oder gar einstückiges Bauteil ausgebildet sind.

Es ist erfindungsgemäß vorgesehen, dass das kühlmediumdurchlassende Haltesegment eine Druckscheibe mit sich in axialer Richtung von einer Stirnwandung der Druckscheibe weg erstreckenden und zumindest abschnittsweise in radialer Richtung entlang der Stirnwandung erstreckender Vorsprünge ist. Vorteilhaft weist das Haltesegment mindestens einen Vorsprung, besonders vorteilhaft mindestens zwei oder mehr Vorsprünge auf. Die Vorsprünge sind beispielsweise in Gestalt von Rippen, Wandungen, Materialerhebungen ausgebildet, wobei beispielsweise zwischen zwei sich erstreckenden Vorsprüngen zumindest eine Durchlassöffnung ausgebildet ist, Diese Durchlassöffnung, welche beispielsweise in Gestalt eines Durchlasskanales vorliegt, wird vorteilhaft gebildet bei einer Anordnung der Druckscheibe an dem Blechpaket. Hierbei kontaktieren die axial freiliegenden Materialbereiche der Vorsprünge eine Stirnwandung bzw. axiale Seitenwandung des Blechpaketes, wodurch die Durchlassöffnung abgedeckt bzw. umschlossen, insbesondere ausgebildet wird.

Alternativ ist erfindungsgemäß vorgesehen, dass das kühlmediumdurchlassende Haltesegment aus einer Druckscheibe und einem zwischen der Druckscheibe und dem Blechpaket anzuordnendem Zwischenelement mit sich in axialer Richtung von einer Stirnwandung des Zwischenelementes weg erstreckenden und zumindest abschnittsweise in radialer Richtung entlang der Stirnwandung erstreckenden Vorsprüngen besteht. Vorteilhaft weist das Zwischenelement mindestens einen Vorsprung, besonders vorteilhaft mindestens zwei oder mehr Vorsprünge auf. Die Vorsprünge sind beispielsweise in Gestalt von Rippen, Wandungen, Materialerhebungen ausgebildet, wobei beispielsweise zwischen zwei sich erstreckenden Vorsprüngen eine Durchlassöffnung ausgebildet ist. Diese Durchlassöffnung, welche beispielsweise in Gestalt eines Durchlasskanales vorliegt, wird vorteilhaft gebildet bei einer Anordnung des kühlmediumdurchlassende Haltesegment an dem Blechpaket, wobei das Zwischenelement zwischen der Druckscheibe und dem Blechpaket angeordnet ist und die Vorsprünge sich ausgehend vom einer Stirnwandung des Zwischenelementes in Richtung des Blechpaketes erstrecken. Hierbei kontaktieren die axial freiliegenden Materialbereiche der Vorsprünge eine Stirnwandung bzw. axiale Seitenwandung des Blechpaketes, wodurch die wenigstens eine Durchlassöffnung abgedeckt bzw. umschlossen, insbesondere ausgebildet wird.

Vorteilhaft weist das Zwischenelement ein nicht ferromagnetisches Material auf. Besonders vorteilhaft liegt die Permeabilitätszahl des Zwischenelementes unter 5, sodass magnetische Streuungen, die den Wirkungsgrad der elektrischen Maschine verringern würden, vermieden werden. Demzufolge dient das Zwischenelement vorteilhaft der elektromagnetischen Abschirmung von in axialer Richtung auftretendem parasitärem Magnetfluss. Die sich in axialer Richtung erstreckende Breite des Zwischenstückes, inklusive der Vorsprünge, beträgt vorteilhaft ca. 2 - 6 mm, besonders vorteilhaft ca. 4 mm. Es ist denkbar, dass das Zwischenelement aus einem Kunststoffmaterial oder Aluminiummaterial - zumindest teilweise - gefertigt ist. Zudem ist es auch möglich, dass unabhängig der in der Beschreibung aufgezeigten Ausführung der radialen Durchlassöffnungen komplexe Durchlassöffnungsgeometrien verwirklicht werden, um einen hinreichenden Wärmeabtransport zu gewährleisten. Dank der Verwendung eines Zwischenelementes ist folglich eine spezifische Materialauswahl der Druckscheiben in Hinblick auf deren ferromagnetische Eigenschaften irrelevant. Folglich ist es denkbar auch Druckscheiben mit einem Stahl-Werkstoff zu verwenden.

Im Rahmen der Erfindung ist es möglich, dass der Hohlzylindermantel der Rotorwelle zumindest eine radiale Bohrung im Bereich des Spaltes aufweist. Das bedeutet, dass ein Kühlmedium beispielsweise ausgehend von dem Rotorwellenhohlraum über diese radiale Bohrung in den zwischen der Rotorwelle und dem Blechpaket erzeugten Spalt bringbar ist. Hierbei ist es möglich, dass die radiale Bohrung in einem in Längsrichtung betrachteten distalen Endbereich des Hohlzylindermantels oder auch in dessen Mitte ausgebildet ist. Vorteilhaft ist die radiale Bohrung der Rotorwelle zumindest jedoch in dem Bereich des Zylindermantels ausgebildet, welcher in Überdeckung mit dem Spalt, insbesondere Ringspalt ist.

Es ist des Weiteren denkbar, dass der Hohlzylindermantel eine Mehrzahl von in Umfangsrichtung gleich beabstandet ausgebildete radiale Bohrungen im Bereich des Spaltes aufweist. Vorteilhaft ist dabei jede der Mehrzahl an radialen Bohrungen in dem Bereich des Hohlzylindermantels eingebracht, welcher in Überdeckung mit dem Spalt, insbesondere dem Ringspalt ist. Hierbei ist es möglich, dass das Kühlmedium beispielsweise ausgehend vom Rotorwellenhohlraum durch die Mehrzahl an radialen Bohrungen in den Spalt eintritt. Es ist ebenso möglich, dass ein durch den Spalt fließendes Kühlmedium über die radialen Bohrungen in den Rotorwellenhohlraum eintritt und beispielsweise über eine Bohrung in einem der Flansche, insbesondere im Bereich des Flanschzapfens, aus dem Rotorwellenhohlraum hinaus transportiert wird. Es ist des Weiteren möglich, dass die Mehrzahl an radialen Bohrungen in beiden Endbereichen des Hohlzylindermantels ausgebildet ist, wobei es auch möglich ist, dass die Mehrzahl der radialen Bohrungen in der axialen Mitte des Hohlzylindermantels ausgebildet ist.

Im Rahmen der Erfindung ist es des Weiteren denkbar, dass die radiale Bohrung zur Erzeugung einer Strömung zumindest in Gestalt eines schiefen Hohlzylinders ausgebildet ist oder an dessen Bohrungswandung eine Struktur aufweist. Folglich ist es möglich, dass die radiale Bohrung bzw. die Mehrzahl an radialen Bohrungen eine schiefe Gestalt, insbesondere eine schräg verlaufende Bohrungsinnenwandung und/oder eine strömungserzeugende Struktur aufweisen. Es ist ebenfalls möglich, dass zumindest eine der radialen Bohrung eine derartige Gestalt aufweist. Vorteilhaft wird durch die benannte geometrische Gestaltung der radialen Bohrungen, das heißt in Form eines schiefen Hohlzylinders und/oder auch mittels der Ausgestaltung von definierten Strukturen, eine Strömung des Kühlmediums durch die radialen Bohrungen entweder aus dem Rotorwellenhohlraum in den Spalt oder aus dem Spalt in den Rotorwellenhohlraum hinein erzeugt.

Es ist des Weiteren möglich, dass wenigstens einer der Flansche der Rotorwelle ein mediumdurchlassender Flansch ist, wobei eine axiale Durchgangsöffnung dezentral zur Rotorwellenlängsachse in einer Stirnwandung, das bedeutet einer sich im Wesentlichen in radialer Richtung erstreckenden Wandung des Flansches ausgebildet ist. Es ist auch denkbar, dass eine Mehrzahl an derartigen dezentral zur Rotorwellenachse ausgebildeten axialen Durchgangsöffnungen in der Stirnwandung dieses Flansches angeordnet sind. Dabei ist es möglich, dass der mediumdurchlassender Flansch beispielsweise einen Flanschzapfen mit einem Gewinde, insbesondere einem Innengewinde zur Anordnung beispielsweise einer Welle mit einem entsprechenden Außengewinde aufweist, wobei gleichzeitig ein Kühlmedium über die in der Stirnwandung eingebrachten axialen Durchgangsöffnungen in den Rotorwellenhohlraum hinein oder aus diesen Rotorwellenhohlraum hinaus transportiert wird.

Es ist ebenso denkbar, dass wenigstens einer der Flansche der Rotorwelle ein mediumdurchlassender Flansch ist, wobei eine axiale Durchgangsöffnung in einem Flanschzapfen des Flansches im Bereich des Rotorwellenhohlraumes ausgebildet ist. Hierbei handelt es sich vorteilhaft um eine zentrisch zu Rotorwellenlängsachse ausgebildete axial Durchgangsöffnung, welche sich derart durch den Flanschzapfen erstreckt, dass ein Kühlmedium durch den mediumdurchlassenden Flansch, insbesondere durch den Flanschzapfen des mediumdurchlassenden Flansches in den Rotorwellenhohlraum eingebracht bzw. aus diesem hinaus transportiert werden kann.

Im Rahmen der Erfindung ist es des Weiteren denkbar, dass wenigstens ein Kühlmediumführungselement zumindest abschnittsweise innerhalb des Rotorwellenhohlraumes angeordnet ist. Vorteilhaft erstreckt sich dieses Kühlmediumführungselement durch eine Öffnung, insbesondere eine axiale Durchgangsöffnung durch einen der Flansche, insbesondere durch einen mediumdurchlassenden Flansch bis in den Rotorwellenhohlraum hinein. Es ist auch denkbar, dass sich das Kühlmediumführungselement durch den gesamten Rotorwellenhohlraum entlang der Rotorwellenlängsachse hindurch erstreckt. Besonders vorteilhaft erstreckt sich das Kühlmediumführungselement durch eine zentrisch zur Rotorwellenlängsachse ausgebildeten axialen Durchgangsöffnung durch den Flanschzapfen eines mediumdurchlassenden Flansches. Vorteilhaft weist das Kühlmediumführungselement einen ersten Querschnitt zur Zuführung des Kühlmediums in den Rotorwellenhohlraum und einen zweiten Querschnitt zur Abführung des Kühlmediums aus dem Rotorwellenhohlraum hinaus auf. Es ist des Weiteren möglich, dass das Kühlmediumführungselement derart ausgestaltet ist, dass eine gleichmäßige Verteilung des Kühlmediums auf die innere Oberfläche des Hohlzylindermantels der Rotorwelle, insbesondere in Umfangsrichtung, ermöglicht ist. Vorteilhaft weist das Kühlmediumführungselement ein trichterförmiges Endstück auf, wobei sich dieses trichterförmige Endstück bzw. der Trichter in den Rotorwellenhohlraum hinein öffnet und in Richtung des mediumdurchlassenden Flansches verjüngt. Vorteilhaft bildet sich die Verjüngung des Trichters fortlaufend als Rohr aus, welches sich durch die axiale Durchgangsöffnung des mediumdurchlassenden Flansches hindurch erstreckt.

Es ist des Weiteren eine elektrische Maschine beansprucht, welche ein Rotorsegment gemäß der zuvor genannten Art aufweist. Die elektrische Maschine weist zudem einen die Rotorwelle radial umgebenden Stator, aufweisend eine Statorwicklung und ein den Stator umgebendes Gehäuse auf, wobei das Gehäuse zumindest einen zur Außenumgebung abgeschlossen Kühlkanal zur Leitung eines Kühlmediums zum Kühlen der elektrischen Maschine aufweist. Vorteilhaft erstreckt sich der Kühlkanal in der Wandung des Gehäuses zumindest abschnittsweise in axialer und/oder radialer Richtung gegenüber dem Rotorsegment. Mittels der Ausbildung eines derartigen Kühlkanals schließt sich ein Kühlkreislauf. Zudem ist auch eine konvektive Kühlung der Wickelköpfe sowie die Entwärmung des Kühlmediums über die Statormantelkühlung möglich. Vorteilhaft bedarf es des Weiteren keiner Öffnung des Gehäuses, sodass die elektrische Maschine folglich gekapselt ist. Aufgrund einer permanenten Umwälzung der Luft im Innenraum der elektrischen Maschine ist es möglich Orte großer Wärmeentstehung wirkungsvoll zu kühlen, wobei ein Temperaturausgleich innerhalb der elektrischen Maschine herbeigeführt wird.

Bei der erfindungsgemäßen elektrischen Maschine ergeben sich sämtliche Vorteile, die bereits zu einem Rotorsegment gemäß dem ersten Aspekt der Erfindung beschrieben worden sind.

### AUSFÜHRUNGSFORMEN

Ein erfindungsgemäßes Rotorsegment sowie eine erfindungsgemäße elektrische Maschine werden nachfolgend anhand von Zeichnungen näher erläutert. Es zeigen jeweils schematisch:
- Figur 1: in einer Schnittdarstellung eine Ausführungsform eines erfindungsgemäßen Rotorsegmentes,
- Figur 2a: in einer Draufsicht die in der Figur 1 gezeigte Ausführungsform eines erfindungsgemäßen Rotorsegmentes,
- Figur 2b: in einer Draufsicht der in der Figur 2a aufgezeigte Schnitt A bis A
- Figur 3a: in einer Draufsicht eine weitere Ausführungsform eines erfindungsgemäßen Rotorsegmentes,
- Figur 3b: in einer Draufsicht der in der Figur 3a aufgezeigte Schnitt B bis B,
- Figur 3c: in einer Draufsicht eine weitere Ausführungsform eines erfindungsgemäßen Rotorsegmentes,
- Figur 3d: in einer Draufsicht der in der Figur 3c aufgezeigte Schnitt C bis C,
- Figur 4: in einer Schnittdarstellung eine weitere Ausführungsform eines erfindungsgemäßen Rotorsegmentes,
- Figur 5: in einer Schnittdarstellung eine weitere Ausführungsform eines erfindungsgemäßen Rotorsegmentes,
- Figur 6: in einer Schnittdarstellung eine weitere Ausführungsform eines erfindungsgemäßen Rotorsegmentes,
- Figur 7: eine Draufsicht auf den mediumdurchlassenden Flansch des in der Figur 6 gezeigten Rotorsegmentes,
- Figur 8: eine weitere Ausführungsform eines erfindungsgemäßen Rotorsegmentes, und
- Figur 9: eine Ausführungsform einer erfindungsgemäßen elektrischen Maschine.

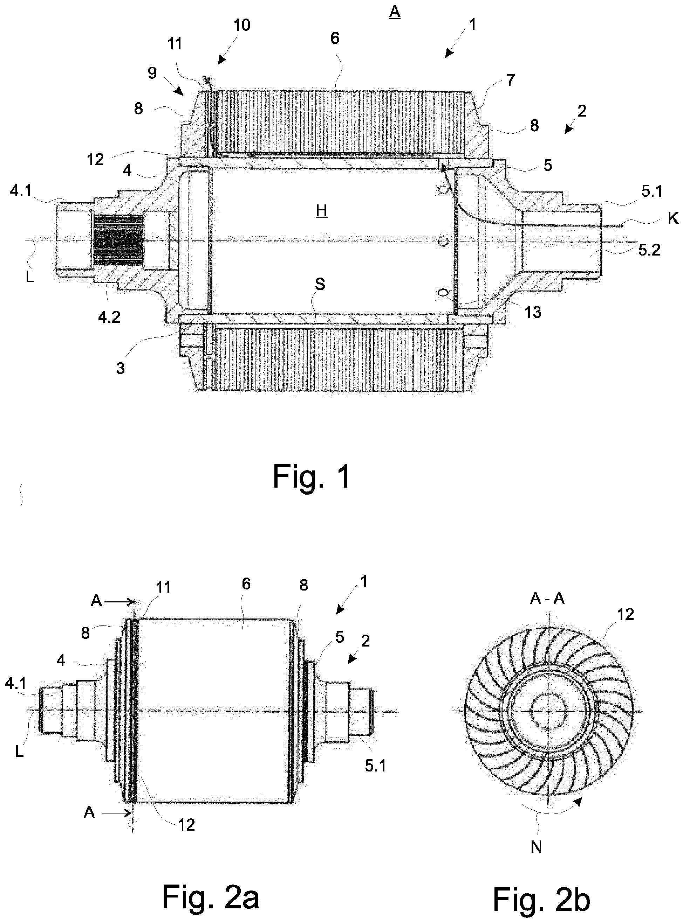

Elemente mit gleicher Funktion und Wirkungsweise sind in den Figuren 1 bis 9 jeweils mit denselben Bezugszeichen versehen.

In der Figur 1 ist in einer Schnittdarstellung schematisch eine Ausführungsform eines erfindungsgemäßen Rotorsegmentes 1 gezeigt. Das Rotorsegment 1 weist eine Rotorwelle 2 auf, welche aus einem Hohlzylindermantel 3 sowie einem ersten Flansch 4 und einem zweiten Flansch 5 besteht. Der erste Flansch 4 ist an einer ersten Stirnseite des Hohlzylindermantels 3 angeordnet, während der zweite Flansch 5 an einer zweiten Stirnseite des Hohlzylindermantels 3 angeordnet ist. Der erste Flansch 4 weist einen Flanschzapfen 4.1 auf, welcher sich entlang der Rotorwellenlängsachse L, auch als Längsachse L bezeichnet, erstreckt, sowie ein Gewinde 4.2, welches vorteilhaft als Innengewinde ausgestaltet ist. Der zweite Flansch 5 weist einen Flanschzapfen 5.1 auf, welcher sich ebenfalls entlang der Längsachse L entgegen der Erstreckungsrichtung des Flanschzapfens 4.1 des ersten Flansches 4 erstreckt. Der Flanschzapfen 5.1 des zweiten Flansches 5 weist eine axiale Durchgangsöffnung 5.2 auf. Folglich ist in der Ausführungsform gemäß der Figur 1 der zweite Flansch 5 ein mediumdurchlassender Flansch. Die axiale Durchgangsöffnung 5.2 erstreckt sich von einer Außenumgebung A des Rotorsegmentes 1 in den Rotorwellenhohlraum H der Rotorwelle 2, sodass ein Kühlmedium, welches mittels Pfeilen dargestellt und mit dem Bezugszeichen K bezeichnet ist, über die axiale Durchgangsöffnung 5.2 des zweiten Flansches in den Rotorwellenhohlraum H eintritt.

Der Holzylindermantel 3 weist wenigstens eine Bohrung 13, insbesondere eine radiale Bohrung 13, vorteilhaft eine Mehrzahl an Bohrungen 13 auf. Die Mehrzahl an Bohrungen 13 sind vorteilhaft zueinander gleich beabstandet in Umfangsrichtung des Hohlzylindermantels 3 in dessen Wandung ausgebildet. Durch die zumindest eine Bohrung 13 strömt das in den Rotorwellenhohlraum H eingebrachte Kühlmedium K in einen Spalt S, welcher zwischen dem Blechpaket 6 und dem Hohlzylindermantel 3 der Rotorwelle 2 gebildet ist. Das Blechpaket 6 wird axial mittels zweier Druckelemente 7 und 9 zusammengepresst. Das erste Druckelement 7 ist in Gestalt einer Druckscheibe 8 ausgebildet. Das zweite Druckelement 9 ist in Gestalt eines kühlmediumdurchlassenden Haltesegmentes 10 ausgebildet. Das kühlmediumdurchlassende Haltesegment 10 weist hierbei eine Druckscheibe 8 sowie ein Zwischenelement 11 auf. Das Zwischenelement 11 ist axial zwischen der Druckschreibe 8 und dem Blechpaket 6 angeordnet. Das Zwischenelement 11 weist eine radiale Durchlassöffnung 12 auf, welche sich von der Außenumgebung A bis zu dem Bereich des Spaltes S erstreckt. Folglich ist es möglich, dass das in den Spalt S eingebrachte Kühlmedium K über die radiale Durchlassöffnung 12 des Zwischenelementes 11 an die in der Figur 1 gezeigte Außenumgebung A abgegeben wird. Es ist zudem auch denkbar, dass der Kühlmittelfluss des Kühlmittels K in entgegengesetzter Richtung verläuft. Hierbei ist es möglich, dass das Kühlmittel K, insbesondere der Kühlmittelstrom K ausgehend von der Außenumgebung, über die radiale Durchlassöffnung 12 des Zwischenelementes 11 in den Spalt S eingebracht und über die Bohrung 13 an den Rotorwellenhohlraum H übergeben und weiter über die axiale Durchgangsöffnung 5.2 des zweiten Flansches 5 wieder aus dem Rotorwellenhohlraum H hinaus geführt wird.

In der Figur 2a ist schematisch eine Draufsicht auf der in der Figur 1 gezeigten Ausführungsform eines erfindungsgemäßen Rotorsegmentes 1 gezeigt. In dieser Draufsicht zeigt sich insbesondere die Ausgestaltung des Zwischenelementes 11 und der in dem Zwischenelemente 11 eingebrachten radialen Durchlassöffnungen 12, wobei eine Mehrzahl an radialer Durchlassöffnungen 12 in Umfangsrichtung beabstandet zueinander ausgebildet sind. Dies ist insbesondere auch in der Figur 2b gezeigt, welche eine Draufsicht auf den Schnitt A - A der Figur 2a darstellt. In der Figur 2b ist eine Ausgestaltung der radialen Durchlassöffnungen 12 gezeigt, welche gebogene Wandungen aufweisen, die entweder in Drehrichtung oder auch entgegen der Drehrichtung eine Biegung aufweisen. Die Drehrichtung ist mit dem Bezugszeichen N gekennzeichnet und entspricht der Drehrichtung bei einer Drehung der Rotorwelle 2 um die Längsachse L. Wie in der Figur 2b gezeigt, ist es ebenfalls denkbar, dass eine Mehrzahl an radialen Durchlassöffnungen 12 verteilt in Umfangsrichtung um die Rotorwelle 2 im Zwischenelement 11 ausgebildet sein können. Vorteilhaft ist der Verlauf der radialen Durchlassöffnungen 12 in radialer Richtung betrachtet derart gebogen, dass eine Schaufelwirkung erzeugt wird. Hierdurch wird entweder das in den Rotorwellenhohlraum H über die axiale Durchgangsöffnung 5.1 eines Flansches 5 eingebrachte Kühlmedium K über die radialen Durchlassöffnungen 12 an eine aus Außenumgebung A abgegeben, wie beispielsweise in der Figur 1 gezeigt, oder das in einer Außenumgebung A befindliche Kühlmedium K wird über die Mehrzahl an Durchlassöffnungen 12 in den Spalt S und von dort in den Rotorwellenhohlraum H transportiert.

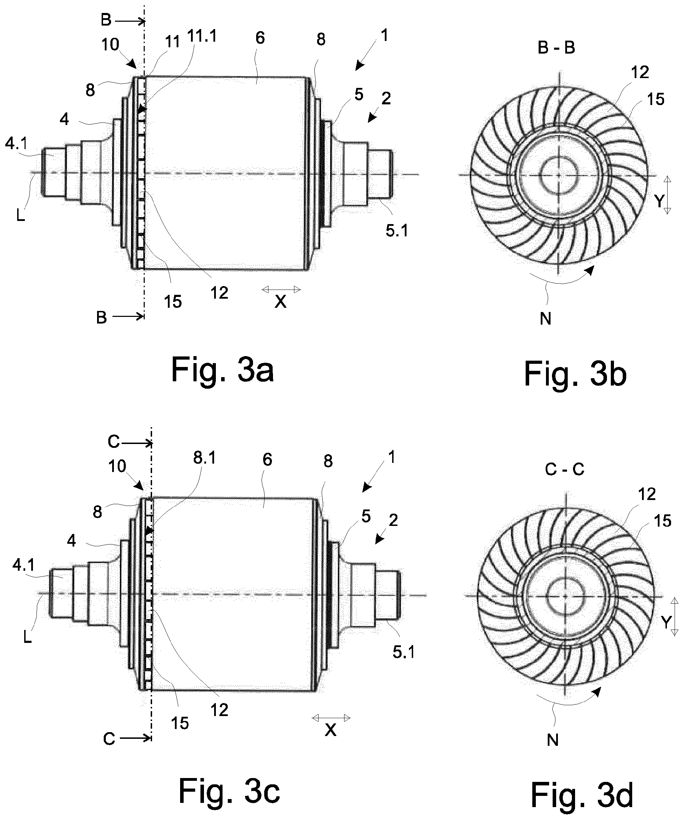

In der Fig. 3a ist schematisch eine Draufsicht auf eine Ausführungsform eines erfindungsgemäßen Rotorsegmentes 1 gezeigt. Das Rotorsegment 1 weist zusätzlich zu dem Blechpaket 6 und der Rotorwelle 2 ein kühlmediumdurchlassendes Halteelement 10 auf. Das kühlmediumdurchlassende Halteelement 10 weist beispielsweise eine Druckscheibe 8 und ein zwischen der Druckscheibe 8 und dem Blechpaket angeordnetes Zwischenelement 11 auf. Das Zwischenelement 11 weist eine Mehrzahl von sich in axialer Richtung X in Richtung des Blechpaketes 6 erstreckender Vorsprünge 15. Diese Vorsprünge 15 sind vorteilhaft in Gestalt von Stegen, Materialaufwerfungen, Wandungen oder in vergleichbarer Gestalt ausgebildet. Wie in der Fig. 3b gezeigt, welche eine Draufsicht auf den in der Figur 3a gezeigten Schnitt B-B ist, ist es denkbar, dass sich die Vorsprünge 15 in gebogener Form in radialer Richtung Y entlang einer Stirnwandung 11.1 (vgl. Figur 3a) des Zwischenelementes 11. Von welcher die Vorsprünge 15 sich in axialer Richtung X weg erstrecken, verlaufen. Zwischen den einzelnen Vorsprüngen 15, wobei in den Figuren 3a und 3b aus Gründen der Übersichtlichkeit lediglich ein Vorsprung mit dem Bezugszeichen 15 gekennzeichnet wurde, bilden sich radiale Durchlassöffnungen 12 aus, die vorteilhaft in Gestalt von Durchlasskanälen zumindest zu einer Seite hin offen, das bedeutet nicht durch eine Wandung abgedeckt und daher nicht vollständig von einer oder einer Mehrzahl von Wandungen umschlossen sind. Wie in der Figur 3a ersichtlich, kontaktieren die in axialer Richtung X liegenden Bereiche der Vorsprünge 15 eine Seitenwandung des Blechpaketes 6. Diese Seitenwandung des Blechpaketes 6 deckt folglich die Durchlassöffnungen 12 ab.

Vergleichbares ist in den Figuren 3c und 3d gezeigt, wobei jedoch als kühlmediumdurchlassendes Halteelement 10 lediglich eine Druckscheibe 8 Verwendung findet, die einen Vorsprung 15, vorteilhaft eine Mehrzahl an Vorsprüngen 15 aufweist, die sich ausgehend von einer Stirnseite 8.1 der Druckscheibe 8 in axialer Richtung X erstrecken und entlang dieser Stirnseite 8.1 in radialer Richtung Y, in gebogener oder gerader Form, verlaufen. Die Ausgestaltung der Vorsprünge 15 entspricht im Wesentlichen derjenigen der Vorsprünge 15, wie zu der in den Figuren 3a und 3b aufgeführten Ausführungsform eines erfindungsgemäßen Rotorsegmentes 1, sodass auf die hierzu aufgeführte Beschreibung Bezug genommen wird.

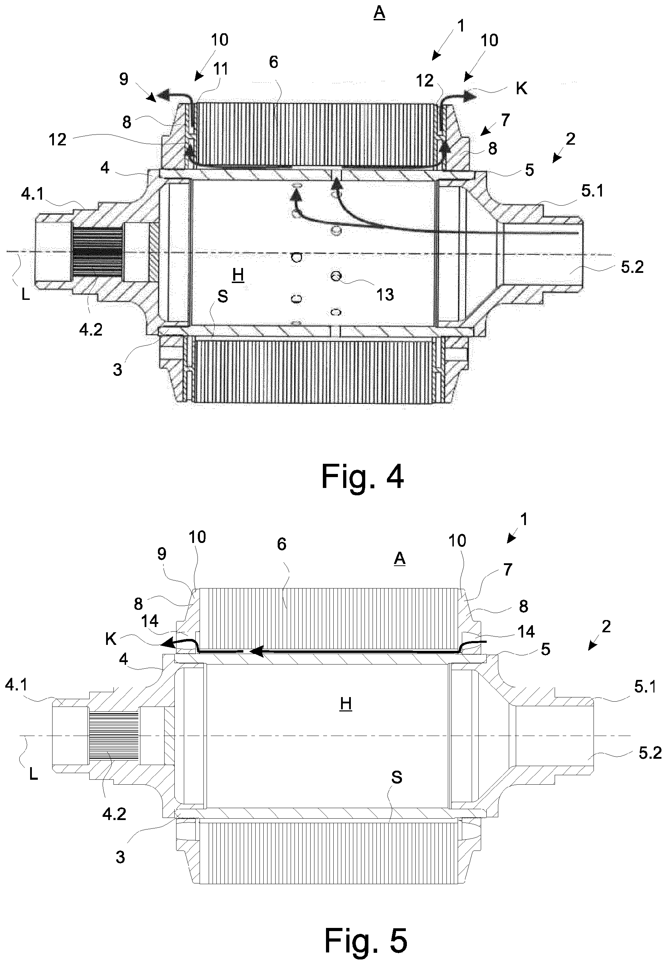

In der Figur 4 ist in einer Schnittdarstellung schematisch eine weitere Ausführungsform eines erfindungsgemäßen Rotorsegmentes 1 gezeigt. Vergleichbar zu der in der Figur 1 gezeigten Ausführungsform eines erfindungsgemäßen Rotorsegmentes 1 weist auch die in der Figur 4 gezeigte Ausführungsform des erfindungsgemäßen Rotorsegmentes 1 eine gebauter Rotorwelle 2 sowie ein zwischen zwei Druckelementen 7 und 9 axial ein gespanntes Blechpaket 6 auf. Im Unterschied zu der in der Figur 1 gezeigten Ausführungsform eines erfindungsgemäßen Rotorsegmentes 1 weist die in der Figur 4 gezeigt Ausführungsform eines erfindungsgemäßen Rotorsegmentes 1 zwei kühlmediumdurchlassende Haltesegmente 10 auf. Beide kühlmediumdurchlassende Haltesegmente 10 bestehen jeweils aus einem Flansch 8 sowie einem Zwischenelement 11. Die in dem Hohlzylindermantel 3 eingebrachten Bohrungen 13 verteilen sich entlang von zwei in Umfangsrichtung verlaufenden und axial voneinander beabstandeten Reihen in Umfangsrichtung zueinander gleich beabstandet. Vorteilhaft sind dabei die jeweiligen Bohrungen 13 der beiden Reihen in Umfangsrichtung versetzt zueinander ausgebildet. Der über den mediumdurchlassenden Flansch 5 eingebrachte Kühlmediumstrom K wird folglich über die axiale Durchgangsöffnung. 5.2 in den Rotorwellenhohlraum H eingebracht und von dort über die Mehrzahl an Bohrungen 13 in den Spalt S, welcher zwischen dem Blechpaket 6 und dem Hohlzylindermantel 3 ausgebildet ist, transportiert. Von dort ausgehend wird der Kühlmittelstrom K weiter über die jeweiligen Zwischenelemente 11 der beiden kühlmediumdurchlassenden Haltesegmente 10 an die Außenumgebung A abgegeben.

In der Figur 5 ist in einer Schnittdarstellung schematisch eine weitere Ausführungsform eines erfindungsgemäßen Rotorsegmentes 1 gezeigt. Abweichend zu den Ausführungsformen gemäß den Figuren 1 und 4 weist die in der Figur 5 gezeigt Ausführungsform eines erfindungswesen Rotorsegmentes 1 ein erstes Druckelement 7 sowie ein zweites Druckelement 9 auf. Beide Druckelemente 7 und 9 sind jeweils in Form einer Druckschreibe 8 mit zumindest einer axialen Durchlassöffnungen 14 ausgebildet, wobei es zudem denkbar ist, dass wenigstens eine der beiden Druckscheiben 8 auch eine Mehrzahl an axialer Durchlassöffnungen 14 aufweist. Vorteilhaft verteilen sich die Mehrzahl an axialen Durchlassöffnungen in Umgangsrichtung beabstandet zueinander. Die jeweilige axiale Durchlassöffnung 14, oder die Mehrzahl an axialen Durchlassöffnungen 14, ist bzw. sind in einem Bereich der Druckscheibe 8 ausgebildet, in welchem eine Übergabe des Kühlmediums K von einer axialen Durchlassöffnung 14 einer der Druckscheiben 8 an den Spalt S und weiter zu einer axialen Durchlassöffnung 14 der anderen Druckscheibe 8 ermöglicht wird. Das bedeutet, dass die axiale Durchlassöffnung 14 bzw. die Mehrzahl an axialen Durchlassöffnungen 14 angenähert zur zentrischen Bohrung der Druckscheibe, durch welche sich hindurch die Rotorwelle, insbesondere der Hohlzylindermantel erstreckt, zumindest abschnittsweise in einem Bereich der Druckscheibe ausgebildet sind, welcher in Überdeckung mit dem Spalt S ist.

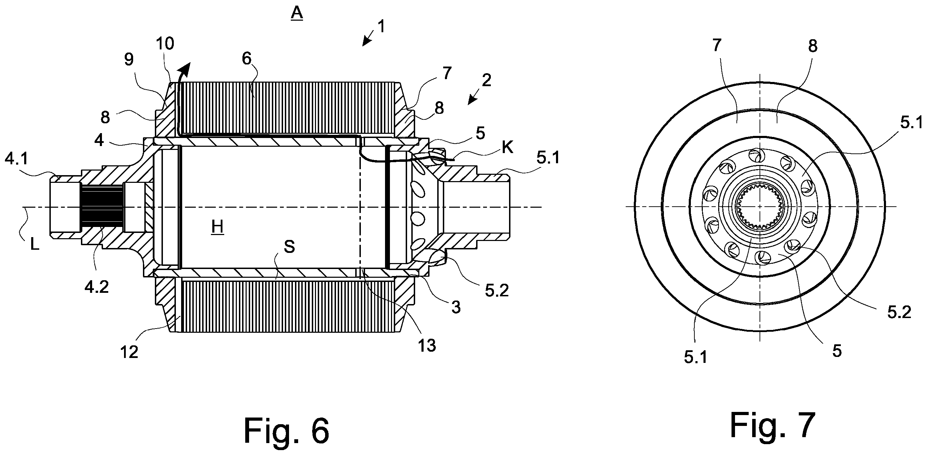

In der Figur 6 ist in einer Schnittdarstellung schematisch eine weitere Ausführungsform eines erfindungsgemäßen Rotorsegmentes 1 gezeigt. Dieser Ausführungsform entspricht im Wesentlichen der in Figur 1 gezeigten Ausführungsform eines erfindungsgemäßen Rotorsegmentes 1, wobei jedoch die radialen Durchlassöffnungen 12 nicht, wie in der Figur 1 gezeigt, in einem Zwischenelement 11 eines kühlmediumdurchlassenden Haltesegmentes 10 ausgebildet sind, sondern in der Druckscheibe 8 selbst. Das bedeutet, dass vorteilhaft kein weiteres Bauteil zwischen die Druckschreibe 8 und dem Blechpaket 6 anzuordnen ist, um eine radiale Führung der Kühlmediumstromes K entlang des Blechpaketes 6 zu ermöglichen. Zudem weist der mediumdurchlassende Flansch 5 eine Mehrzahl an axialen Durchgangsöffnungen 5.2 auf, welche dezentral zur Rotorwellenlängsachse L in der Wandung des Flansches 5 ausgebildet sind. Vorteilhaft sind die axialen Durchgangsöffnungen 5.2 in Umfangsrichtung beabstandet zueinander ausgebildet und weisen einen im Wesentlichen in axialer Richtung schräg verlaufenden Öffnungskanal auf. Hierdurch wird vorteilhaft eine Ansaugung des Kühlmediums K von der Außenumgebung A in den Rotorwellenhohlraum H ermöglicht. Eine Draufsicht auf diesen mediumdurchlassenden Flansche 5 des Rotorsegmentes 1 gemäß der Figur 6, ist in der Figur 7 gezeigt.

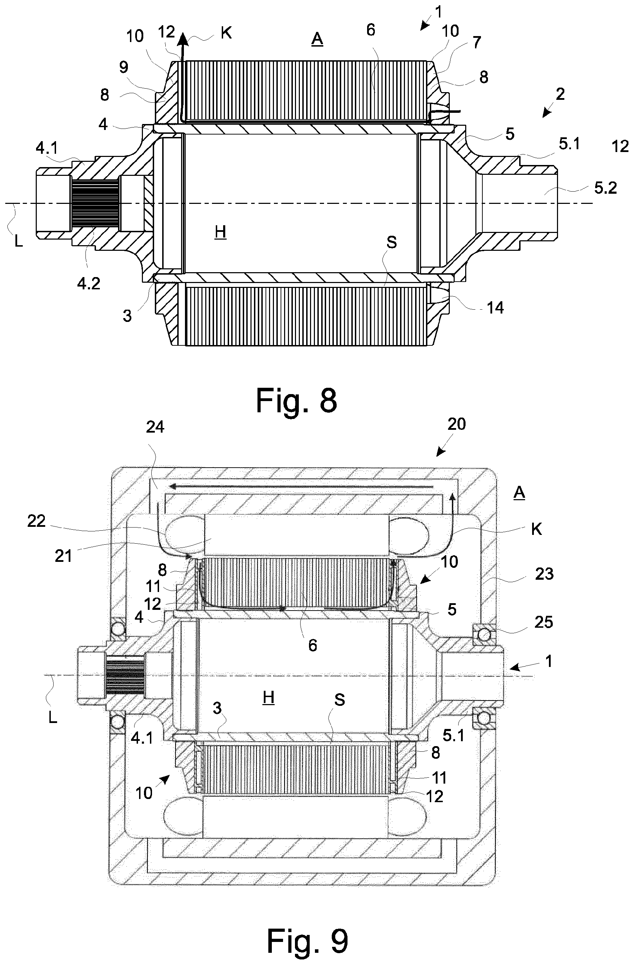

In der Figur 8 ist eine weitere Ausführungsform eines erfindungsgemäßen Rotorsegmentes 1 gezeigt. Im Unterschied zu den bisher gezeigten Ausführungsformen des erfindungsgemäßen Rotorsegmentes 1 weist die in der Figur 8 gezeigte Ausführungsform ein erstes Druckelement 7 auf, welches als Druckschreibe 8 mit einer axialen Durchlassöffnung 14 ausgestaltet ist, und ein zweites Druckelement 9, welches in Form einer Druckschreibe 8 mit einer radialen Durchlassöffnung 12 ausgebildet ist. Folglich ist es möglich den Kühlmediumstrom K über die axiale Durchlassöffnung 14 über den Spalt S zur radialen Durchlassöffnung 12 zu transportieren bzw. zu leiten oder vice versa. Hierdurch wird vorteilhaft eine Entwärmung des Blechpaketes 6 über drei Seiten ermöglicht.

In der Figur 9 ist eine Ausführungsform einer erfindungsgemäßen elektrischen Maschine 20 gezeigt. Die elektrische Maschine 20 weist zusätzlich zu einem Rotorsegment 1 auch einen Stator 21 mit einer Starterwicklung 22 auf. Den Stator 21 sowie das Rotorsegment 1 umgebend ist ein Gehäuse 23 der elektrischen Maschine 20 ausgebildet, in deren Gehäusewandung zumindest abschnittsweise ein Kühlkanal 24 eingebracht ist. Der Kühlkanal 24 erstreckt sich ausgehend von einer Gehäuseinnenseite I durch einen Abschnitt der Gehäusewandung und endet wieder im Bereich der Gehäuseinnenseite, sodass es sich bei dem Gehäuse 23 vorteilhaft um ein geschlossenes Gehäuse 23 handelt. Das in der elektrischen Maschine 20 gemäß der Figur 9 angeordnete Rotorsegment 1 entspricht im Wesentlichen der in der Figur 4 gezeigten Ausführungsform eines erfindungsgemäßen Rotorsegmentes 1, wobei jedoch das in der Figur 9 aufgezeigte Rotorsegment 1 keine in dem Hohlzylindermantel 3 ausgebildeten Bohrungen 13 aufweist. Vielmehr findet der Transport des Kühlmediums K zwischen dem Gehäuse 23, insbesondere dem Kühlkanal 24 des Gehäuses 23 und dem Blechpaket 6 statt. Das bedeutet, dass ein Kühlkreislauf erzeugt wird, bei welchem das Kühlmedium K nicht durch den Rotorwellenhohlraum H geführt ist, sondern über zwei als kühlmediumdurchlassende Haltesegmente 10 ausgebildete Druckelemente 7 und 9 und dem Spalt S sowie entlang des Kühlkanals 24. Das Rotorsegment 1 ist über Lager 25 innerhalb des Gehäuses 23 drehbar gelagert.

### Bezugszeichenliste

- 1: Rotorsegment
- 2: Rotorwelle
- 3: Wohnzimmermantel
- 4: erster Flansch
- 4.1: Flanschzapfen
- 4.2: Gewinde
- 5: zweiter Flansch
- 5.1: Flanschzapfen
- 5.2: axiale Durchgangsöffnung
- 6: Blechpaket
- 7: erstes Druckelement
- 8: Druckschreibe
- 8.1: Stirnseite
- 9: zweites Druckelement
- 10: kühlmediumdurchlassendes Halteelemente
- 11: Zwischenelemente
- 11.1: Stirnseite
- 12: radiale Durchlassöffnungen
- 13: Bohrung
- 14: axiale Durchlassöffnungen
- 15: Vorsprung

- 20: elektrische Maschine
- 22: Stator
- 22: Statorwicklung
- 23: Gehäuse
- 24: Kühlkanal
- 25: Lager

- A: Außenumgebung
- H: Rotorwellenhohlraum
- I: Gehäuseinnenseite
- L: Rotorwellenlängsachse/ Längsachse
- N: Drehrichtung
- S: Spalt
- X: axiale Richtung
- Y: radiale Richtung

## Patentansprüche

1. Rotorsegment (1) einer elektrischen Maschine (20) wobei das Rotorsegment (1) eine Rotorwelle (2) und ein Blechpaket (6), welches derart auf der Rotorwelle (2) angeordnet ist, dass zwischen einer äußeren Oberfläche eines Hohlzylindermantels (3) der Rotorwelle (2) und einer inneren Oberfläche des Blechpaketes (6) ein zum Durchlass eines Kühlmediums (K) radial hinreichend groß dimensionierter Ringspalt (S) erzeugt ist, aufweist sowie zwei Druckelemente (7, 9) aufweist, welche, das Blechpaket (6) axial einspannend, auf der Rotorwelle (2) bewegungsfest aufgenommen sind, wobei wenigstens eines der Druckelemente (7, 9) als kühlmediumdurchlassendes Haltesegment (10) ausgebildet ist, **dadurch gekennzeichnet, dass** das kühlmediumdurchlassende Haltesegment (10) eine Druckscheibe (8) mit sich in axialer Richtung von einer Stirnwandung (8.1) der Druckscheibe (8) weg erstreckenden und zumindest abschnittsweise in radialer Richtung entlang der Stirnwandung (8.1) erstreckender Vorsprünge (15) ist oder das kühlmediumdurchlassende Haltesegment (10) aus einer Druckscheibe (8) und einem zwischen der Druckscheibe (8) und dem Blechpaket (6) anzuordnendem Zwischenelement (11) mit sich in axialer Richtung von einer Stirnwandung (11.1) des Zwischenelementes (11) weg erstreckenden und zumindest abschnittsweise in radialer Richtung entlang der Stirnwandung (11.1) erstreckenden Vorsprüngen (15) besteht.

2. Rotorsegment (1) nach Anspruch 1,
**dadurch gekennzeichnet, dass**
die Rotorwelle (2) eine gebaute Rotorwelle (2) ist, welche aus dem Hohlzylindermantel (3) sowie einem an einer ersten Stirnseite des Hohlzylindermantels (3) angeordneten ersten Flansch (4) und einem an einer zweiten Stirnseite des Hohlzylindermantels (3) angeordneten zweiten Flansch (5) besteht, sodass ein Rotorwellenhohlraum (H) gebildet ist.

3. Rotorsegment (1) nach einem der Ansprüche 1 oder 2,
**dadurch gekennzeichnet, dass**
das kühlmediumdurchlassende Haltesegment (10) eine Druckscheibe (8) mit zumindest einer axialen (14) oder einer radialen Durchlassöffnung (12) ist.

4. Rotorsegment (1) nach einem der Ansprüche 1 oder 2,
**dadurch gekennzeichnet, dass**
das kühlmediumdurchlassende Haltesegment (10) aus einer Druckscheibe (8) und einem zwischen der Druckscheibe (8) und dem Blechpaket (6) anzuordnendem Zwischenelement (11) mit zumindest einer radialen Durchlassöffnung (12) besteht.

5. Rotorsegment (1) nach wenigstens einem der vorangegangenen Ansprüche,
**dadurch gekennzeichnet, dass**
der Hohlzylindermantel (3) der Rotorwelle (2) zumindest eine radiale Bohrung (13) im Bereich des Ringspaltes (S) aufweist.

6. Rotorsegment (1) nach wenigstens einem der vorangegangenen Ansprüche,
**dadurch gekennzeichnet, dass**
der Hohlzylindermantel (3) eine Mehrzahl von in Umfangsrichtung zueinander gleich beabstandet ausgebildeten radialen Bohrungen (13) im Bereich des Spaltes aufweist.

7. Rotorsegment (1) nach einem der vorangegangenen Ansprüche 5 oder 6,
**dadurch gekennzeichnet, dass**
die radiale Bohrung (13) zur Erzeugung einer Strömung zumindest in Gestalt eines schiefen Hohlzylinders ausgebildet ist oder an dessen Bohrungswandung eine Struktur aufweist

8. Rotorsegment (1) nach wenigstens einem der vorangegangenen Ansprüche,
**dadurch gekennzeichnet, dass**
wenigstens einer der Flansche (4, 5) der Rotorwelle (2) ein mediumdurchlassender Flansch ist, wobei eine axiale Durchgangsöffnung (5.2) dezentral zur Rotorwellenlängsachse (L) in einer Stirnwandung des Flansches (4, 5) ausgebildet ist.

9. Rotorsegment (1) nach wenigstens einem der vorangegangenen Ansprüche 1 bis 8,
**dadurch gekennzeichnet, dass**
wenigstens einer der Flansche (4, 5) der Rotorwelle (2) ein mediumdurchlassender Flansch ist, wobei eine axiale Durchgangsöffnung (5.2) konzentrisch zur Rotorwellenlängsache (L) in einem Flanschzapfen (4.1, 5.1) des Flansches (4, 5) im Bereich des Rotorwellenhohlraumes (H) ausgebildet ist.

10. Rotorsegment (1) nach wenigstens einem der vorangegangenen Ansprüche,
**dadurch gekennzeichnet, dass**
wenigstens ein Kühlmediumführungselement zumindest abschnittsweise innerhalb des Rotorwellenhohlraumes (H) angeordnet ist.

11. Elektrische Maschine (20) aufweisend ein Rotorsegment (1) gemäß einem der vorangegangenen Ansprüche, wobei die elektrische Maschine (20) einen die Rotorwelle (2) radial umgebenden Stator (21) aufweisend eine Statorwicklung (22) und ein den Stator (21) umgebendes Gehäuse (23) aufweist, wobei das Gehäuse (23) zumindest einen zur Außenumgebung abgeschlossenen Kühlkanal (24) zur Leitung eines Kühlmediums (K) zum Kühlen der elektrischen Maschine (20) aufweist.

## Claims

1. A rotor segment (1) of an electric machine (20), wherein the rotor segment (1) has a rotor shaft (2) and a laminated core (6), which is arranged on the rotor shaft (2) in such a way that a gap (S) dimensioned sufficiently large in the radial direction for the passage of a cooling medium (K) is produced between an outer surface of a hollow cylinder shell (3) of the rotor shaft (2) and an inner surface of the laminated core (6), and two pressure elements (7, 9), which are held on the rotor shaft (2) in a stationary manner, axially clamping the laminated core (6), wherein at least one of the pressure elements (7, 9) is designed as a holding segment (10) allowing cooling medium to pass through, **characterized in that** the holding segment (10) allowing cooling medium to pass through is a pressure disk (8) with protrusions (15) extending away from an end wall (8.1) of the pressure disk (8) in the axial direction and extending at least for a portion in the radial direction along the end wall (8.1), or the holding segment (10) allowing cooling medium to pass through consists of a pressure disk (8) and an intermediate element (11) to be situated between the pressure disk (8) and the laminated core (6) with protrusions (15) extending away from an end wall (11.1) of the intermediate element (11) in the axial direction and extending at least for a portion in the radial direction along the end wall (11.1).

2. The rotor segment (1) as claimed in claim 1,
**characterized in that**
the rotor shaft (2) is a constructed rotor shaft (2), consisting of the hollow cylinder shell (3) as well as a first flange (4) disposed at a first end face of the hollow cylinder shell (3) and a second flange (5) disposed at a second end face of the hollow cylinder shell (3), so that a rotor shaft cavity (H) is formed.

3. The rotor segment (1) as claimed in one of claims 1 or 2,
**characterized in that**
the holding segment (10) allowing cooling medium to pass through is a pressure disk (8) with at least one axial (14) or one radial passage opening (12).

4. The rotor segment (1) as claimed in one of claims 1 or 2,
**characterized in that**
the holding segment (10) allowing cooling medium to pass through consists of a pressure disk (8) and an intermediate element (11) to be situated between the pressure disk (8) and the laminated core (6) with at least one radial passage opening (12).

5. The rotor segment (1) as claimed in at least one of the preceding claims,
**characterized in that**
the hollow cylinder shell (3) of the rotor shaft (2) comprises at least one radial borehole (13) in the area of the gap (S).

6. The rotor segment (1) as claimed in at least one of the preceding claims,
**characterized in that**
the hollow cylinder shell (3) has a plurality of radial boreholes (13) in the area of the gap, spaced apart from each other by equal distances in the circumferential direction.

7. The rotor segment (1) as claimed in at least one of the preceding claims 5 or 6,
**characterized in that**
the radial borehole (13) is designed to generate a flow at least in the form of a sloping hollow cylinder or has a structure on its borehole wall.

8. The rotor segment (1) as claimed in at least one of the preceding claims,
**characterized in that**
at least one of the flanges (4, 5) of the rotor shaft (2) is a flange allowing medium to pass through, wherein an axial passage opening (5.2) is formed off-center from the rotor shaft longitudinal axis (L) in an end wall of the flange (4, 5).

9. The rotor segment (1) as claimed in at least one of the preceding claims 1 to 8,
**characterized in that**
at least one of the flanges (4, 5) of the rotor shaft (2) is a flange allowing medium to pass through, wherein an axial passage opening (5.2) is formed concentrically to the rotor shaft longitudinal axis (L) in a flange journal (4.1, 5.1) of the flange (4, 5) in the region of the rotor shaft cavity (H).

10. The rotor segment (1) as claimed in at least one of the preceding claims,
**characterized in that**
at least one element conducting cooling medium is situated at least for a portion inside the rotor shaft cavity (H).

11. An electric machine (20) comprising a rotor segment (1) as claimed in one of the preceding claims, wherein the electric machine (20) comprises a stator (21) radially surrounding the rotor shaft (2), having a stator winding (22) and a housing (23) surrounding the stator (21), wherein the housing (23) comprises at least one cooling duct (24) sealed off from the outer surroundings for conducting a cooling medium (K) to cool the electric machine (20).

## Revendications

1. Segment de rotor (1) d'une machine électrique (20), le segment de rotor (1) comprenant un arbre de rotor (2) et un noyau feuilleté (6), lequel est disposé sur l'arbre de rotor (2) de telle sorte qu'un interstice annulaire (S) dimensionné de manière suffisamment grande radialement pour le passage d'un agent de refroidissement (K) soit produit entre une surface extérieure d'une enveloppe cylindrique creuse (3) de l'arbre de rotor (2) et une surface intérieure du noyau feuilleté (6), ainsi que deux éléments de pression (7, 9), lesquels sont logés de manière solidaire en déplacement sur l'arbre de rotor (2) de manière à serrer axialement le noyau feuilleté (6), au moins l'un des éléments de pression (7, 9) étant réalisé sous forme de segment de retenue (10) laissant passer l'agent de refroidissement, **caractérisé en ce que** le segment de retenue (10) laissant passer l'agent de refroidissement est un disque de pression (8) comportant des saillies (15) s'étendant dans la direction axiale à partir d'une paroi frontale (8.1) du disque de pression (8) et s'étendant le long de la paroi frontale (8.1) au moins dans certaines parties dans la direction radiale ou le segment de retenue (10) laissant passer l'agent de refroidissement est constitué d'un disque de pression (8) et d'un élément intermédiaire (11) devant être disposé entre le disque de pression (8) et le noyau feuilleté (6) et comportant des saillies (15) s'étendant dans la direction axiale à partir d'une paroi frontale (11.1) de l'élément intermédiaire (11) et s'étendant le long de la paroi frontale (11.1) au moins dans certaines parties dans la direction radiale.

2. Segment de rotor (1) selon la revendication 1, **caractérisé en ce que**
l'arbre de rotor (2) est un arbre de rotor (2) en plusieurs parties, lequel est constitué de l'enveloppe cylindrique creuse (3) ainsi que d'une première bride (4) disposée au niveau d'un premier côté frontal de l'enveloppe cylindrique creuse (3) et d'une deuxième bride (5) disposée au niveau d'un deuxième côté frontal de l'enveloppe cylindrique creuse (3), de sorte qu'une cavité d'arbre de rotor (H) soit formée.

3. Segment de rotor (1) selon l'une des revendications 1 et 2,
**caractérisé en ce que**
le segment de retenue (10) laissant passer l'agent de refroidissement est un disque de pression (8) comportant au moins une ouverture de passage axiale (14) ou une ouverture de passage radiale (12).

4. Segment de rotor (1) selon l'une des revendications 1 et 2,
**caractérisé en ce que**
le segment de retenue (10) laissant passer l'agent de refroidissement est constitué d'un disque de pression (8) et d'un élément intermédiaire (11) devant être disposé entre le disque de pression (8) et le noyau feuilleté (6) et comportant au moins une ouverture de passage radiale (12) .

5. Segment de rotor (1) selon au moins l'une des revendications précédentes,
**caractérisé en ce que**
l'enveloppe cylindrique creuse (3) de l'arbre de rotor (2) comprend au moins un alésage radial (13) dans la région de l'interstice annulaire (S).

6. Segment de rotor (1) selon au moins l'une des revendications précédentes,
**caractérisé en ce que**
l'enveloppe cylindrique creuse (3) comprend, dans la région de l'interstice, une pluralité d'alésage radiaux (13) réalisés de manière espacée les uns des autres par des distances égales dans la direction périphérique.

7. Segment de rotor (1) selon l'une des revendications précédentes 5 et 6,
**caractérisé en ce que**
l'alésage radial (13) est réalisé au moins sous la forme d'un cylindre creux oblique pour la génération d'un écoulement ou comprend une structure au niveau de sa paroi d'alésage.

8. Segment de rotor (1) selon au moins l'une des revendications précédentes,
**caractérisé en ce**
**qu'**au moins l'une des brides (4, 5) de l'arbre de rotor (2) est une bride laissant passer un agent, une ouverture traversante axiale (5.2) étant réalisée de manière décentrée par rapport à l'axe longitudinal d'arbre de rotor (L) dans une paroi frontale de la bride (4, 5).

9. Segment de rotor (1) selon au moins l'une des revendications précédentes 1 à 8,
**caractérisé en ce**
**qu'**au moins l'une des brides (4, 5) de l'arbre de rotor (2) est une bride laissant passer un agent, une ouverture traversante axiale (5.2) étant réalisée de manière concentrique par rapport à l'axe longitudinal d'arbre de rotor (L) dans un tourillon (4.1, 5.1) de la bride (4, 5) dans la région de la cavité d'arbre de rotor (H).

10. Segment de rotor (1) selon au moins l'une des revendications précédentes,
**caractérisé en ce**
**qu'**au moins un élément de guidage d'agent de refroidissement est disposé au moins dans certaines parties à l'intérieur de la cavité d'arbre de rotor (H).

11. Machine électrique (20) comprenant un segment de rotor (1) selon l'une des revendications précédentes, la machine électrique (20) comprenant un stator (21) entourant radicalement l'arbre de rotor (2) et doté d'un enroulement de stator (22) et d'un carter (23) entourant le stator (21), le carter (23) comprenant au moins un canal de refroidissement (24) fermé par rapport à l'environnement extérieur pour le guidage d'un agent de refroidissement (K) pour le refroidissement de la machine électrique (20).
